(19) **Europäisches Patentamt / European Patent Office / Office européen des brevets**

(11) **EP 4 059 357 A1**

(12) **EUROPÄISCHE PATENTANMELDUNG**

(43) Veröffentlichungstag:
**21.09.2022 Patentblatt 2022/38**

(21) Anmeldenummer: **21162581.9**

(22) Anmeldetag: **15.03.2021**

(51) Internationale Patentklassifikation (IPC):
**A23P 30/20** (2016.01)

(52) Gemeinsame Patentklassifikation (CPC):
**A23P 30/20**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Bühler AG**
**9240 Uzwil (CH)**

(72) Erfinder:
• **Klein, Frieder**
**8274 Tägerwilen (CH)**
• **Sattler, Silvan**
**9535 Wilen b. Wil (CH)**
• **Mitchell, Robert W.**
**8050 Zürich (CH)**
• **Meile, David**
**9500 Wil (CH)**

(74) Vertreter: **Hepp Wenger Ryffel AG**
**Friedtalweg 5**
**9500 Wil (CH)**

(54) **VERTEILVORRICHTUNG FÜR EXTRUDER**

(57) Die vorliegende Erfindung betrifft eine Verteilvorrichtung (1) für einen Extruder (10), umfassend mindestens zwei von einer Verteilereinheit (2) wegführende Leitungen (3, 4), wobei jede Leitung (3, 4) eine Temperiervorrichtung (3b, 4b) umfasst. Die vorliegende Erfindung betrifft weiterhin eine Extrudieranlage mit einer derartigen Verteilvorrichtung (1) und ein Verfahren zur Herstellung eines proteinhaltigen Lebensmittels mit dieser Extrudieranlage.

Fig. 1

EP 4 059 357 A1

**Beschreibung**

Die vorliegende Erfindung betrifft das technische Gebiet der Extrusion von Nahrungsmitteln und Futtermitteln für Tiere. Die vorliegende Erfindung betrifft im Detail eine Verteilvorrichtung für Extruder, einen diese Verteilvorrichtung aufweisenden Extruder und ein Verfahren zur Verarbeitung eines fleischanalogen Materials.

Die Herstellung von Materialien mittels Extrusion hat zunehmend Bedeutung erlangt, insbesondere bei der Herstellung von Lebensmitteln. Beispielsweise sei auf Verfahren zur Herstellung von texturierten, proteinreichen Lebensmitteln aus wenigstens einem Rohmaterial mit einem Proteingehalt zwischen 35 Gew.-% und 90 Gew.-%, insbesondere auf der Basis von pflanzlichen Proteinen verwiesen, wobei solche Lebensmittel nachfolgend auch als proteinhaltigen Texturate oder alternative Fleischprodukte (engl. "meat alternatives") bezeichnet werden.

Im Zuge der Nachhaltigkeitswelle gewinnen alternative Fleischprodukte auf der Basis von pflanzlichen Proteinen zunehmend mehr an Bedeutung. Herkömmliche Verfahren zu deren Herstellung enthalten üblicherweise die folgenden Schritte:

- Verwiegen/Dosieren der Rohstoffe,

- Mischen der Rohstoffe,

- Vorkonditionieren (optional),

- Extrudieren, insbesondere unter Zuhilfenahme einer Kühldüse,

- Schneiden.

Bei der Extrusion von Nahrungsmitteln und/oder der Extrusion von Futtermitteln für Tiere erfolgt häufig eine sogenannte Nasstexturierung, bei der sich faserartige Strukturen ausbilden. Das ist beispielsweise dann der Fall, wenn Produkte extrudiert werden, die tierische oder pflanzliche Proteine enthalten. Eine faserartige Struktur ist nicht immer einfach zu erreichen, da ein Extrudat am Ausgang des Extruders typischerweise expandiert, was einer dichten, kompakten, faserartigen Produktstruktur abträglich ist. Daher werden für solche Zwecke im Stand der Technik Kühldüsen verwendet, die am Ausgang des Extruders angeordnet sind und welche die Expansion des Extrudats reduzieren oder, falls gewünscht, auch weitestgehend vollständig unterdrücken sollen.

Eine wesentliche Herausforderung für die Akzeptanz alternativer Fleischprodukte besteht darin, ihre Textur, ihre Farbe und ihre haptischen Eigenschaften (Biss) soweit wie möglich den entsprechenden Eigenschaften echter Fleischprodukte anzugleichen.

Eine weitere Herausforderung besteht darin, eine grosse Menge an derartigem Material möglichst effizient herzustellen. Für diesen Zweck wurden grössere Extruder bereitgestellt, in denen eine grössere Menge an Masse hergestellt werden kann. Üblicherweise werden diese Massen aus dem Extruder direkt in eine Kühldüse überführt, in welcher die Masse auf geeignete Weise abgekühlt wird. Die Durchleitung einer grossen Menge extrudierter Masse durch eine Kühldüse ist aufgrund der Dimensionen einer herkömmlichen Kühldüse jedoch ein limitierender Faktor.

Zur Erhöhung der Effizienz können an einen Extruder mehrere Kühldüsen angeordnet werden. Hierzu ist eine Aufteilung des aus dem Extruder extrudierten Produktstroms in Teilströme erforderlich. Diese werden anschliessend in die jeweiligen Kühldüsen geleitet.

Für eine möglichst effiziente Verfahrensführung ist es erforderlich, dass alle Kühldüsen gleichermassen mit Produkt versorgt werden. Dies kann durch Bereitstellung mechanischer Ventile oder Drosselklappen erreicht werden, mit denen der Fluss von Produkt durch zu den Kühldüsen führenden Leitungen kontrolliert werden kann. Dadurch wird aber das geförderte Produkt mechanisch belastet, was zu einer unerwünschten Beeinflussung der Produkteigenschaften führen kann.

Es war die Aufgabe der vorliegenden Erfindung, eine Vorrichtung und ein Verfahren zur schonenden und effizienten Verarbeitung von grossen Mengen an zu extrudierendem Material bereitzustellen, bei welchem bevorzugt die Produkteigenschaften vorteilhaft beeinflusst werden können.

Die vorstehende Aufgabe wird erfindungsgemäss durch den Gegenstand der beigefügten Ansprüche gelöst.

Im Detail betrifft die vorliegende Erfindung eine Verteilvorrichtung für einen Extruder, umfassend

- ein erstes Verbindungsstück zur Verbindung der Verteilvorrichtung mit einem Ausgang eines Extruders,
- eine Verteilereinheit,
- mindestens zwei von der Verteilereinheit wegführende Leitungen, wobei jede Leitung an ihrem von der Verteilereinheit abgewandten Ende ein zweites Verbindungsstück zur Verbindung mit einer Kühldüse aufweist;

wobei jede Leitung eine Temperiervorrichtung umfasst.

Die erfindungsgemässe Verteilvorrichtung ermöglicht eine effiziente und präzise Regulierung der Teilströme eines aus einem Extruder extrudierten Produktstroms.

Der aus dem Extruder austretende Produktstrom wird in einer Verteilereinheit in Teilströme unterteilt, welche durch separate Leitungen in Kühldüsen überführt werden. Mit Hilfe eines Messgeräts (vorzugsweise Durchflussmessgeräts) oder von voneinander beabstandeten Messgeräten, beispielsweise in einem Anfangsabschnitt und einem Endabschnitt jeder Leitung angeordneten Drucksensoren, können Abweichungen der Fliessgeschwindigkeiten der Teilströme voneinander ermittelt werden. Beispielsweise kann mit Hilfe von Drucksensoren ein etwaiger Druckabfall in einer Leitung ermittelt werden. Aus dem Verhältnis oder der Differenz der so ermittelten Druckabfälle zueinander kann das Verhältnis der durch die entsprechenden Leitungen strömenden Teilströme ermittelt werden. Analog können bei einer anderen Ausführungsform mit Hilfe von Durchflussmessgeräten die Fliessgeschwindigkeiten der Teilströme in den Leitungen ermittelt werden. Aus dem Verhältnis der so ermittelten Fliessgeschwindigkeiten kann das Verhältnis der durch die entsprechenden Leitungen strömenden Teilströme ermittelt werden.

Um eine möglichst gleichmässige Versorgung der Kühldüsen mit Produkt zu erreichen, können die Leitungen temperiert werden. Durch Erhitzen der Leitung wird der Produktfluss in dieser Leitung erhöht, womit gleichzeitig eine Verringerung des Produktflusses in der oder den anderen Leitungen einhergeht. Durch Abkühlen der Leitung wird der Produktfluss in dieser Leitung verringert, womit gleichzeitig eine Erhöhung des Produktflusses in der oder den anderen Leitungen einhergeht. Eine Veränderung der Temperatur einer Leitung kann zu einer Beeinflussung des Reibungsverhaltens des Extrudats mit der Leitungswand und somit zu einer Veränderung der Fliessgeschwindigkeit des Produkts führen. Alternativ kann durch eine Veränderung der Temperatur einer Leitung direkt die Temperatur des in der Leitung vorhandenen Produkts verändert und dadurch dessen Fliessgeschwindigkeit beeinflusst werden.

Erfindungsgemäss wird dadurch eine effiziente und präzise Einstellung der Produktflüsse zu den jeweiligen Kühldüsen erreicht. Zudem erfährt das Produkt bei der Einstellung der Produktflüsse keine mechanische Belastung, da erfindungsgemäss keine mechanischen Reguliermittel wie Ventile oder Drosselklappen eingesetzt werden. Erfindungsgemäss erfolgt die Regulierung der Produktflüsse zu den jeweiligen Kühldüsen ausschliesslich thermisch.

Gemäss einer erfindungsgemäss besonders bevorzugten Ausführungsform kann durch den Einsatz von Drucksensoren auf Strömungsmessvorrichtungen verzichtet werden, welche zur Regulierung von Ventilen oder Drosselklappen erforderlich wären. Die erfindungsgemässe Verteilvorrichtung ist bei dieser Ausführungsform einfacher zu reinigen, da keine Bauteile wie Ventile oder Drosselklappen oder Strömungsmessvorrichtungen vorhanden sind und auf Leitungsverjüngen (d.h. Verringerung des Leitungsdurchmessers in einem Abschnitt zur Flussregulierung) verzichtet werden kann.

Die erfindungsgemässe Verteilvorrichtung ist derart ausgestaltet, dass sie einerseits mit einem Extruder und andererseits mit Kühldüsen lösbar verbunden werden kann. Sämtliche Komponenten der erfindungsgemässen Verteilvorrichtung sind aus einem für den Anwendungszweck geeigneten Material gefertigt, beispielsweise aus rostfreiem Stahl, beschichtetem Stahl oder einem hitzebeständigen Kunststoff.

Gemäss der vorliegenden Erfindung sind einstückige Verteilvorrichtungen umfasst, bei denen die hier genannten Komponenten wie erstes und zweites Verbindungstück, Verteilereinheit und Leitungen Abschnitte der einstückigen Verteilvorrichtung beschreiben. Weiterhin sind gemäss vorliegenden Erfindung Verteilvorrichtungen umfasst, bei denen die hier genannten Komponenten wie erstes und zweites Verbindungstück, Verteilereinheit und Leitungen zumindest teilweise separat gefertigte Bauteil sind, die zu der Verteilvorrichtung zusammengefügt werden. Es ist auch möglich, dass einzelne Bauteile wie erstes Verbindungsstück und Verteilereinheit einstückig gefertigt sind und mit den anderen hier genannten Komponenten zusammengefügt werden.

Die erfindungsgemässe Verteilvorrichtung kann an jeden herkömmlichen Extruder oder an jede herkömmliche Pumpe angeschlossen werden. Hierzu wird ein erstes Verbindungsstück der erfindungsgemässen Verteilvorrichtung mit einem Ausgang eines Extruders oder einer Pumpe verbunden. Das erste Verbindungsstück besitzt eine geeignete Form, um ein Anschliessen an einen Extruder oder eine Pumpe zu realisieren.

Herkömmliche Extruder weisen eine Endplatte auf, an welche vorzugsweise das erste Verbindungsstück der erfindungsgemässen Verteilvorrichtung angeschlossen werden kann. Das erste Verbindungsstück weist hierfür eine geeignete Form und Dimension auf. Es kann sich um ein separates Bauteil wie ein Übergangsstück handeln, mit welchem die Verteilvorrichtung passend an einem Extruder oder einer Pumpe befestigt werden kann. Es kann sich aber auch um einen Abschnitt der Verteilereinheit handeln (d.h. ein integraler Bestandteil der Verteilereinheit, wie eine Endfläche der Verteilereinheit). Das Anschliessen kann mit Hilfe geeigneter und bekannter Verbindungselemente wie Flansche, Klemmen, Schraubverbindungen oder dergleichen erfolgen.

Extruder und Pumpen sind hinlänglich bekannt und müssen hier nicht näher beschrieben werden. Erfindungsgemäss können handelsübliche Extruder verwendet werden, welche im Stand der Technik zur Herstellung entsprechender Lebensmittelprodukte eingesetzt werden. Beispielhaft sei auf die in der WO 2012/158023 A1 genannten Extruder oder auf die Extruder, insbesondere Doppelschneckenextruder, der Firma Bühler verwiesen. Derartige Extruder weisen vorzugsweise ein L/D-Verhältnis (Länge zu Durchmesser) im Bereich von 20 bis 60, bevorzugt 25 bis 50, und besonders bevorzugt 25 bis 40 auf. Erfindungsgemäss bevorzugt werden die Extruder mit 300 bis 1000 U/min, besonders bevorzugt 450 bis 900 U/min betrieben.

Erfindungsgemäss bevorzugt handelt es sich um Extruder, welche einen grossen Produktdurchsatz ermöglichen. Derartige Extruder sind entsprechend grösser dimensioniert als Extruder, welche bislang zur Herstellung von proteinhaltigen Lebensmitteln wie "meat alternatives" verwendet wurden.

Gemäss einer Ausführungsform der vorliegenden Erfindung kann der Extruder eine Zuführöffnung für Gas aufweisen, durch welche Gas (wie $CO_2$ oder $N_2$) in das im Extruder zu behandelnde Produkt eingeleitet werden kann. Auf diese Weise kann eine kontrollierte Porenbildung im Extrudat erreicht werden. Ein derartiger Extruder ist in der WO 2021/032866 A1 beschrieben.

Durch den Ausgang des Extruders tritt extrudiertes Produkt (Extrudat) aus und gelangt in die erfindungsgemässe Verteilvorrichtung. Das Extrudat gelangt zunächst in eine Verteilereinheit. Gemäss einer Ausführungsform der vorliegenden Erfindung kann die Verteilereinheit grundsätzlich als Kegel ausgebildet sein. Die Ausbildung als Kreiskegel ist vorteilhaft. Auch die Ausbildung als Kegelstumpf, insbesondere als Kreiskegelstumpf ist selbstverständlich möglich. Bei kegel- bzw. kreiskegelförmiger Ausbildung kann eine Form mit kugelabschnittsförmiger Spitze realisiert sein, wodurch sich das Strömungsverhalten gezielt beeinflussen und an das Extrudat anpassen lässt. Der Rückstaudruck in den Extruder und das Ausmass der Scherung des Produkts kann beeinflusst werden.

Gemäss einer erfindungsgemässen Ausführungsform kann im Bereich des dem Extruder abgewandten und/oder des dem Extruder zugewandten Endes der Verteilereinheit eine Blende angeordnet sein, mit welcher der Verteilkanal verengbar bzw. verengt ist. Mit derartigen Blenden können wiederum gezielt Produkteigenschaften, insbesondere die Faserigkeit, beeinflusst werden.

Aus dem Verteilerelement führen zwei oder mehrere Ausgänge in Leitungen, durch welche das Produkt auf die Kühldüsen verteilt wird.

Erfindungsgemäss bevorzugt sind zwei Leitungen vorgesehen. Gemäss dieser Ausführungsform hat das Verteilerelement zwei Ausgänge, die in die entsprechenden Leitungen münden.

Gemäss einer Ausführungsform können diese Ausgänge rohrartig ausgebildet sein und beispielsweise y-förmig, U-förmig, V-förmig oder dergleichen angeordnet sein (im Fall von zwei Ausgängen und zwei Leitungen).

Die sich daran anschliessenden Leitungen sind vorzugsweise zylinderförmig. Besonders bevorzugt weisen die Leitungen über mindestens 50%, vorzugsweise mindestens 70%, besonders bevorzugt mindestens 90% der Länge (vom Ausgang des Verteilelements bis zum Eintritt in die Kühldüse) eine konstante Querschnittsfläche auf. So kann vorteilhaft eine gleichmässige Fliessgeschwindigkeit erzielt werden.

Die Leitungen weisen einen Innenraum auf, durch welchen Produkt geleitet werden kann. Die Leitungen sind temperierbar, d.h. die Wand der Leitung und gegebenenfalls der Innenraum und darin enthaltenes Produkt können gekühlt oder erhitzt werden. Hierfür geeignete Temperiereinrichtungen wie Wärmetauscher oder elektrische Heizvorrichtungen sind hinlänglich bekannt. Gemäss einer bevorzugten Ausführungsform der vorliegenden Erfindung umgibt die Temperiervorrichtung mantelförmig den als Produktleitung dienenden Innenraum der Leitung, vorzugsweise über die gesamte Länge der Leitung. Beispielsweise kann in der Wand einer zylinderförmigen Leitung ein beispielsweise ringförmiger Kanal für Kühl- oder Heizmedium angeordnet sein, durch welchen bei Bedarf entsprechendes Kühl- oder Heizmedium wie Wasser oder ein erhitztes Gas geleitet werden kann.

Erfindungsgemäss bevorzugt sind voneinander beabstandete Messgeräte bereitgestellt, um den Produktfluss in den Leitungen zu messen. Vorzugsweise sind diese Messgeräte ausgewählt aus der Gruppe bestehend aus Durchflussmessgeräten, Drucksensoren, Temperaturmessgeräten, Viskositätsmessgeräten, oder Farbmessgeräten. Insbesondere bevorzugt sind diese Messgeräte ausgewählt aus der Gruppe bestehend aus Durchflussmessgeräten und Drucksensoren. Derartige Geräte sind bekannt und müssen hier nicht näher erläutert werden.

Die Messgeräte müssen derart voneinander beabstandet sein, dass eine zuverlässige Messung der zu bestimmenden Produkteigenschaft möglich ist. Geeignete Messanordnungen sind dem Fachmann bekannt. Gemäss einer bevorzugten Ausführungsform ist in einem Anfangsabschnitt und einem Endabschnitt jeder Leitung jeweils ein Drucksensor oder ein Durchflussmessgerät angeordnet. Mit anderen Worten sind an jeder Leitung zwei Drucksensoren oder Durchflussmessgeräte angeordnet. Unter Anfangsabschnitt und Endabschnitt sollen hierbei das jeweils erste und letzte Drittel, vorzugsweise Viertel, der Gesamtlänge der Leitung verstanden werden.

Gemäss einer weiteren Ausführungsform der vorliegenden Erfindung genügt es im Fall der Verwendung von Durchflussmessgeräten, pro Leitung nur ein Durchflussmessgerät bereitzustellen (beispielsweise im Anfangsabschnitt oder Endabschnitt einer Leitung). Gemäss einer weiteren Ausführungsform der vorliegenden Erfindung mit einer Verteilvorrichtung mit zwei Leitungen genügt es sogar, nur ein einziges Durchflussmessgerät in einer der Leitungen bereitzustellen. In diesem Fall kann der Produktstrom der anderen Leitung aus dem gesamten Durchsatz, welcher dem Extruder oder der Pumpe entnommen werden kann, berechnet werden.

Gemäss einer weiteren Ausführungsform der vorliegenden Erfindung können die Messgeräte aber auch an einer Endplatte eines Extruders und am Anfang einer Kühldüse angeordnet sein.

Besonders bevorzugt sind die Messgeräte, vorzugsweise die Drucksensoren oder Durchflussmessgeräte, am Beginn (d.h. am Übergang vom Verteilerelement zur Leitung) und/oder am Ende (d.h. am Übergang von der Leitung zur Kühldüse) jeder Leitung angeordnet.

Drucksensoren sind hinlänglich bekannt. Erfindungsgemäss können herkömmliche Drucksensoren eingesetzt werden. Durchflussmessgeräte sind ebenfalls hinlänglich bekannt. Erfindungsgemäss können herkömmliche Durchflussmessgeräte eingesetzt werden.

Jede Leitung ist über ein zweites Verbindungsstück mit einer entsprechenden Kühldüse verbunden.

Das zweite Verbindungsstück besitzt eine geeignete Form und Dimension, um ein Anschliessen an eine Kühldüse zu realisieren. Das Anschliessen kann mit Hilfe geeigneter und bekannter Verbindungselemente wie Flansche, Klemmen, Schraubverbindungen oder dergleichen erfolgen. Es kann sich um ein separates Bauteil wie ein Übergangsstück handeln, mit welchem die Verteilvorrichtung passend an einer Kühldüse befestigt werden kann. Es kann sich aber auch um einen Abschnitt der Leitung handeln (d.h. ein integraler Bestandteil der Leitung, wie eine Endfläche der Leitung).

Gemäss einer bevorzugten Ausführungsform umfasst das zweite Verbindungsstück einen gekrümmten Rohrabschnitt. Damit kann erreicht werden, dass schräg angeordnete Leitungen passend mit waagrecht zum Extruder oder zur Pumpe angeordneten Kühldüsen verbunden werden können. Beispielsweise kann der gekrümmte Rohrabschnitt eine Krümmung im Bereich von 30° bis 90°, vorzugsweise von 45° aufweisen.

Kühldüsen sind hinlänglich bekannt. Die erfindungsgemässe Verteilvorrichtung kann an herkömmlich zusammen mit Extrudern verwendete Kühldüsen angeschlossen werden.

Beispielhaft seien Kühldüsen genannt, wie sie in der EP-3 524 059 A1 beschrieben sind. Es handelt sich hierbei um eine Nahrungs- bzw. Futtermittelextruderkühldüse mit einem Einlassende, das an einem Nahrungs- bzw. Futtermittelextruder befestigbar ist und an dem Extrudat in die Kühldüse hineinführbar ist;

einem Auslassende, an dem gekühltes Extrudat abführbar ist;

einem Extrudatströmungskanal, der sich im Wesentlichen vom Einlassende zum Auslassende erstreckt;

mindestens einem Kühlmittelströmungskanal, mit dem der Extrudatströmungskanal in Wärmeübertragungsverbindung steht;

wobei im Querschnitt zur Hauptströmungsrichtung (8) der Extrudatströmungskanal im Wesentlichen als Ringausschnitt ausgebildet ist; und

eine Aussenwand des Extrudatströmungskanals mindestens aus einem ersten Segment und einem zweiten Segment ausgebildet ist, wobei das erste Segment und das zweite Segment über mechanische Verbindungselemente miteinander verbunden sind.

Mit einer derartigen Kühldüse können Kapazitäten im Bereich von 20 bis 3000 kg/h (vorzugsweise 500 bis 3000 kg/h, bevorzugter 2000 bis 3000 kg/h) Extrudat bei nur geringer Baugrösse des Kühlwerkzeugs mit einer typischen Länge von 0.5 bis 2.5 m (vorzugsweise 0.75 bis 2.25 m, bevorzugter 1 bis 2m) und einem Durchmesser von 100 bis 800 mm (vorzugsweise 200 bis 600 mm, bevorzugter 400 bis 600 mm) realisiert werden. Es können aber auch Kühldüsen wie Schlitzkühldüsen verwendet werden. Für solche Kühldüsen ist die die vorstehende Beschreibung eines Durchmessers nicht anwendbar.

Die Kühldüse ist in den Bereichen, die mit dem Nahrungs- bzw. Futtermittel in Kontakt kommen, also insbesondere dem Extrudatströmungskanal, aus rostfreiem Edelstahl (bspw. Sortennummern 1.43xx oder 1.44xx gemäss EN 10088) ausgebildet. Diese Materialien zeichnen sich durch hochgradige Lebensmittelechtheit aus.

Die Messgeräte, vorzugsweise Drucksensoren oder Durchflussmessgeräte, sind mit einer Steuer- und Regeleinheit verbunden. Es kann sich hierbei um Computervorrichtungen handeln, welche Signale von den Drucksensoren empfangen, ggfs. speichern, auswerten und darauf basierend Steuersignale an die in der Verteilvorrichtung angeordneten Temperiereinrichtungen abgeben können. Derartige Steuer- und Regeleinheiten sind hinlänglich bekannt.

Die Temperiereinrichtungen können unabhängig von Messgeräten und der vorstehenden Steuer- und Regeleinheit eingestellt werden, beispielsweise manuell in Abhängigkeit von beobachteten Produkteigenschaften. Vorzugsweise sind die Temperiereinrichtungen ebenfalls mit der Steuer- und Regeleinheit verbunden und können von ihr derart kontrolliert werden, dass ein Abkühl- oder Aufwärmvorgang durchgeführt wird. Beispielsweise kann der Abkühl- oder Aufwärmvorgang dadurch erfolgen, dass nach Empfang eines entsprechenden Signals von der Steuer- und Regeleinheit in der Temperiereinrichtung ein Sperrelement gelöst wird und Kühl- oder Aufheizmedium (wie beispielsweise Wasser oder Gas mit entsprechender Temperatur) aus einem Reservoir in einen ringförmigen Abschnitt im Mantel der zylinderförmigen Leitung strömen kann. Es wird also erfindungsgemäss bevorzugt ein Regelkreis mit einer aus dem durch die Messgeräte ermittelten Ergebnis abgeleiteten Regelgrösse und einer aus dem Schritt des Erhitzens oder Abkühlens der Leitung abgeleiteten Führungsgrösse definiert.

Gemäss einer besonders bevorzugten Ausführungsform der vorliegenden Erfindung kann ein Wärmetauscher bereitgestellt sein, durch welches Extrudat nach Verlassen des Extruders vor Eintritt in eine Kühldüse strömt. Es wurde gefunden, dass die Produktqualität einer Proteinschmelze, insbesondere eines Nassextrudats, erheblich verbessert und energieeffizienter durchgeführt werden kann, wenn die Proteinschmelze durch einen Wärmetauscher geführt wird, in welchem eine kurzzeitige Wärmebehandlung (Wärmeschock-Behandlung) durchgeführt werden kann.

Unter einer Wärmeschock-Behandlung wird erfindungsgemäss ein Prozess verstanden, bei welchem ein Material für kurze Zeit (1-10 s) einer hohen Temperatur von 150-200°C ausgesetzt wird.

Der Wärmetauscher kann an einer beliebigen Stelle zwischen Ausgang aus dem Extruder und Eintritt in einer Kühldüse angeordnet sein. Im Fall der Verwendung zusammen mit der erfindungsgemässen Verteilvorrichtung ist der Wärmetauscher vorzugsweise vor der Verteilereinheit der Verteilvorrichtung angeordnet, damit das gesamte Extrudat die gewünschte Wärmeschockbehandlung erfährt, bevor es in Teilströme aufgeteilt wird. Alternativ kann in jedem der Teilströme (d.h. vor oder nach den Leitungen) ein Wärmetauscher angeordnet werden.

Für eine Wärmeschockbehandlung geeignete Wärmetauscher sind bekannt. Beispielsweise sei auf Rohr-Mantel-Wärmetauscher wie Bündelröhrenwärmetauscher verwiesen. Es handelt sich hierbei beispielsweise um eine Vorrichtung, bei welcher das Produkt durch enge Kanäle geführt wird und hierbei einer homogenen Wärmebehandlung ausgesetzt wird. Gemäss einer bevorzugten Ausführungsform wird ein Wärmetauscher verwendet, welcher Kanäle aufweist, durch die Produkt von einer ersten Seite des Wärmetauschers durch einen länglichen, vorzugsweise zylinderförmigen Abschnitt zu einer zweiten Seite des Wärmetauschers geführt werden kann.

Es hat sich weiterhin gezeigt, dass die für das erfindungsgemässe Verfahren erforderliche Länge des Extruders verringert werden kann, wenn ein vorstehend beschriebener Wärmetauscher verwendet wird. Beispielsweise kann ein Teil des Extrudergehäuses (Extruderhäusesegment, fachsprachlich als Barrel bezeichnet, wobei ein Barrel üblicherweise eine Länge des vierfachen Durchmessers der verwendeten Extruderschnecke aufweist) eingespart und die Extruderschnecke entsprechend verkürzt werden, was zu einer vorteilhaften Platzeinsparung führt, die insbesondere bei grossen Extrudern (wie sie erfindungsgemäss bevorzugt eingesetzt werden) erhebliche Relevanz hat. Es ist beispielsweise möglich, das Verfahren mit einem Extruder mit 5 Barrels statt herkömmlich mit 9 Barrels durchzuführen. Der Grund hierfür liegt darin, dass in dem Wärmetauscher eine effizientere und homogenere Wärmebehandlung durchgeführt werden kann als im Extruder selbst möglich ist. Während in einem Extruder vornehmlich die äusseren Ränder der Produktschmelze erhitzt werden, während im vorstehenden Wärmetauscher eine homogene Durcherhitzung der gesamten Produktschmelze erreicht wird. Dies führt insbesondere zu einer gewünschten Texturierung eines Nassextrudats.

Die vorliegende Erfindung betrifft somit weiterhin eine Extrudieranlage, umfassend einen Extruder und eine erfindungsgemässe Verteilvorrichtung, welche über ein erstes Verbindungsstück mit einem Ausgang des Extruders verbunden ist.

Erfindungsgemäss bevorzugt ist an jeder Leitung der Verteilvorrichtung jeweils eine Kühldüse über ein zweites Verbindungsstück angeschlossen, welches an einem von der Verteilereinheit der Verteilvorrichtung abgewandten Ende der Leitung angeordnet ist.

Erfindungsgemäss bevorzugt umfasst die Extrudieranlage eine erfindungsgemässe Verteilvorrichtung mit zwei Leitungen, und entsprechend zwei Kühldüsen.

Erfindungsgemäss bevorzugt umfasst die Extrudieranlage weiterhin ein Wärmetauscher, welcher Kanäle aufweist, durch die Produkt von einer ersten Seite des Wärmetauschers durch einen länglichen Abschnitt zu einer zweiten Seite des Wärmetauschers geführt werden kann. Gemäss dieser Ausführungsform kann vorzugsweise der Extruder verkürzt sein, beispielsweise auf einen 5-Barrel-Extruder (d.h. einen Extruder mit einer Länge entsprechend dem 20-fachen Durchmesser der eingesetzten Extruderschnecke).

Die vorstehenden Ausführungen zu verwendbaren Extrudern und Kühldüsen treffen hier analog zu.

Die vorliegende Erfindung betrifft weiterhin ein Verfahren zur Herstellung eines proteinhaltigen Lebensmittels in einer vorstehend beschriebenen Extrudieranlage, umfassend die Schritte:

> a) Verarbeitung einer Rohstoffmischung, wobei mindestens ein Rohstoff ein Protein ist, vorzugsweise ein pflanzliches Protein, in einem Extruder,
> b) Herausführen des Extrudats aus dem Extruder in die Verteilvorrichtung,
> c) Führen von Teilströmen des Extrudats durch Leitungen der Verteilvorrichtung in Kühldüsen, wobei die Fliessgeschwindigkeiten der Teilströme in den Leitungen mit Hilfe eines Messgeräts, vorzugsweise Durchflussmessgeräts, oder von voneinander beabstandeten Messgeräten ermittelt werden und hieraus Abweichungen der Fliessgeschwindigkeiten der Teilströme voneinander bestimmt werden,
> d) Gegebenenfalls Erhitzen oder Abkühlen einer Leitung während des Schritts c) in Abhängigkeit von den in Schritt c) ermittelten Fliessgeschwindigkeiten der Teilströme, um die Fliessgeschwindigkeiten der Teilströme in den Leitungen zu modifizieren.

Die Verarbeitung der Rohstoffmischung im Extruder kann auf bekannte Weise erfolgen.

Erfindungsgemäss werden Rohstoffe in einen Extruder eindosiert, wobei mindestens ein Rohstoff ein Protein ist, vorzugsweise ein pflanzliches Protein. Der Begriff "wobei mindestens ein Rohstoff ein Protein ist" umfasst auch Ausführungsformen, bei denen der Rohstoff ein Protein enthält oder eine Proteinquelle darstellt.

Als Proteinquellen werden vorzugsweise Pflanzen eingesetzt, beispielsweise Hülsenfrüchte (wie etwa Erbsen, Lupinen oder Bohnen, beispielsweise Favabohnen), Getreide (wie etwa Weizen, Soja, Raps oder Sonnenblumen), oder Algen. Es können aber auch tierische Proteine wie Milchprotein oder Molkenprotein oder Proteine aus Muskelfleisch oder Bindegewebe verwendet werden. Es ist aber erfindungsgemäss bevorzugt, Produkte herzustellen, welche frei von tierischen Proteinen sind.

Erfindungsgemäss bevorzugt umfassen die Rohstoffe mindestens eine Komponente, welche einen Faseranteil aufweist. Beispielhaft seien Erbsenfasern genannt, welche einen Faseranteil von mindestens 50% ihres Trockengewichts aufweisen.

Die proteinhaltigen Rohstoffe werden zusammen mit einer Flüssigkeit in den Extruder dosiert. Wie vorstehend ausgeführt handelt es sich hier um mindestens einen vorstehend beschriebenen proteinhaltigen Rohstoff und eine vorstehend beschriebene Flüssigkeit.

Optional können eine gasbildende Verbindung und eine gasfreisetzende Verbindung zugegeben werden, sofern eine Bereitstellung eines Gases im Extruder durch Freisetzung des Gases über eine chemische Reaktion dieser Verbindungen erfolgen soll.

Als Flüssigkeiten können Wasser, Boullion und/oder eine ölhaltige Substanz wie beispielsweise einen ölhaltigen Aromaträger eingesetzt werden.

Beispielsweise werden die proteinhaltigen Rohstoffe und die Flüssigkeit in einem derartigen Verhältnis eindosiert, dass der Proteingehalt im Rohmaterial grösser als 50 % ist und besonders bevorzugt im Bereich von 60 % bis 90 % liegt. Entsprechend liegt der Stärkeanteil (Kohlenhydratanteil) im Rohmaterial vorzugsweise bei höchstens 50%, vorzugsweise im Bereich von 5 bis 30%.

Zusätzlich können üblicherweise für die Herstellung alternativer Fleischprodukte verwendete Additive zugegeben werden. Beispielsweise können Salze wie Natriumchlorid, Fette, Öle oder andere Lipide zugegeben werden, vorzugsweise in einer Menge von 0,1 bis 10 Gew.-%, bezogen auf das Gesamtgewicht aller Rohstoffe.

Unter einem Nasstexturat wird ein Extrudat verstanden, bei dem der Feststoffanteil des Extrudats im Schritt c) im Bereich von 20 % bis 60 %, bevorzugt im Bereich von 30 % bis 50 % liegt. Für Nasstexturate hat es sich als vorteilhaft erwiesen, wenn der Proteingehalt in den Trockenrohstoffen grösser als 50 % ist und besonders bevorzugt im Bereich von 60 % bis 90 % liegt.

In einem ersten Abschnitt des Extruders werden die vorher abgewogenen Rohstoffe eindosiert. Alternativ können die verschiedenen Rohstoffe dem Extruder auch sequentiell in verschiedenen Abschnitten zugegeben werden.

Vor dem Schritt a) des Eindosierens in den Extruder können ein oder mehrere der Rohstoffe vorkonditioniert werden. Auf diese Weise lässt sich die Verweilzeit der Proteinmatrix im Prozess beeinflussen. Dabei wird derzeit davon ausgegangen, dass eine längere Verweilzeit zu einer verbesserten Faserstruktur führt, da dann beim Extrudieren eine erhöhte Zahl an quervernetzten Filamenten entsteht. Erfindungsgemäss bevorzugt beträgt die Verweilzeit im Vorkonditionierer 3 bis 600 s, besonders bevorzugt 3 bis 60 s, insbesondere bevorzugt 5 bis 15 s.

Im Extruder werden die eindosierten Rohstoffe miteinander vermischt, so dass eine flüssige, vorzugsweise wässrige Proteinzusammensetzung ausgebildet wird. Der Mischer kann als Schnellmischer ausgebildet sein. Er kann eine Wasser- und Dampfzuleitung aufweisen. Der Extruder kann über eine Wasserzuleitung und optional eine Dampfzuleitung verfügen.

Im Extruder findet eine Verarbeitung der flüssigen, vorzugsweise wässrigen Proteinzusammensetzung statt. Hierbei wird die Zusammensetzung über die Denaturierungstemperatur des Proteins erhitzt, vorzugsweise auf eine Temperatur im Bereich von 80 bis 180°C, bevorzugter 120 bis 160°C, besonders bevorzugt 130 bis 150°C, in Abhängigkeit des eingesetzten Proteins. Bevorzugt sind die Gehäuse des Extruders temperiert. Die Zusammensetzung wird unter Druck (üblicherweise 1 bis 60 bar, vorzugsweise 10 bis 30 bar, besonders bevorzugt 20 bis 30 bar) zu einer homogenen Mischung verknetet. Hierbei erfolgt üblicherweise ein Energieeintrag von 10 bis 120 Wh/kg, vorzugsweise 15 bis 30 Wh/kg.

Das erfindungsgemässe Verfahren kann grundsätzlich mit einem Durchsatz im Bereich von 40 bis 10000 kg/h, vorzugsweise 1000 bis 7000 kg/h, besonders bevorzugt 1000 bis 4000 kg/h, betrieben werden, wobei das Material im Extruder vorzugsweise eine Haltezeit (Verweilzeit) von15 s bis 120 s, bevorzugt von 20s bis 90 s aufweist.

Ein gemäss einer bevorzugten Ausführungsform des erfindungsgemässen Verfahrens eingeleitetes Gas kann an unterschiedlichen Positionen am Extruder eingeleitet werden - entweder bereits nahe am Eingangsbereich, im Mittelbereich oder im Ausgangsbereich. Erfindungsgemäss bevorzugt befindet sich die Zuführöffnung für das Gas in einem Abschnitt des Extruders, der sich in der Nähe der Kühldüse (d.h. am Extruderauslass) befindet, vorzugsweise im letzten Drittel der Extruderlänge vor der Kühldüse, besonders bevorzugt im letzten Viertel der Extruderlänge vor der Kühldüse.

Gemäss einer bevorzugten Ausführungsform der vorliegenden Erfindung befindet sich an der Position der Zuführöffnung für das Gas im Extruder statt eines herkömmlichen Förderelements ein Knet- und/oder Mischelement zum intensiven Vermischen des eingeleiteten Gases mit dem Extrudat, so dass das Gas in dem Extrudat dispergiert wird. Derartige Elemente sind bekannt. Beispielhaft seien sogenannte Igelschnecken, Barriereschnecken, T-Elemente (beispielsweise von der Firma Extricom) genannt. Sie geben einen geringen Energieeintrag in das Produkt bei gleichzeitig hoher distributiver und dispersiver Mischwirkung.

Anschliessend erfolgt ein Schritt des Herausführens des Extrudats aus dem Extruder in die erfindungsgemässe Verteilvorrichtung. Wie vorstehend ausgeführt gelangt das Extrudat zunächst in ein Verteilerelement und wird dort in Teilströme aufgeteilt. Diese Teilströme werden durch Leitungen der Verteilvorrichtung in Kühldüsen geführt, wobei die Fliessgeschwindigkeiten der Teilströme in den Leitungen mit Hilfe eines Messgeräts (vorzugsweise Durchflussmessgeräts) oder von voneinander beabstandeten Messgeräten ermittelt werden und hieraus eine Abweichung der Fliessgeschwindigkeiten der Teilströme voneinander bestimmt wird.

Vorzugsweise wird bei jeder Leitung der Druck am Beginn der Leitung und am Ende der Leitung gemessen. Hieraus wird eine Druckdifferenz ($p_{aus}-p_{ein}$) bestimmt, welche einem Druckabfall entspricht.

Anschliessend wird in der vorstehend beschriebenen Steuer- und Regeleinheit das Verhältnis oder die Differenz der Druckabfälle in den Leitungen ermittelt. Im Fall einer Ausführungsform mit zwei Leitungen ist dies beispielsweise:

$$R = \frac{(p_{aus} - p_{ein})_1}{(p_{aus} - p_{ein})_2}$$

Anhand des so ermittelten Wertes wird entschieden, ob im Wesentlichen gleich grosse Teilströme durch die Leitungen strömen. Ist dies nicht der Fall, kann eine Justierung der Teilströme durchgeführt werden, indem gegebenenfalls ein Erhitzen oder Abkühlen einer Leitung während des Durchführens des Produkts durch die Leitungen erfolgt. Durch Erhitzen der Leitung wird der Produktfluss in dieser Leitung erhöht, womit gleichzeitig eine Verringerung des Produktflusses in der oder den anderen Leitungen einhergeht. Durch Abkühlen der Leitung wird der Produktfluss in dieser Leitung verringert, womit gleichzeitig eine Erhöhung des Produktflusses in der oder den anderen Leitungen einhergeht. Die Temperierung erfolgt mit Hilfe der vorstehend beschriebenen Temperiereinrichtungen. Eine Veränderung der Temperatur einer Leitung kann zu einer Beeinflussung des Reibungsverhaltens des Extrudats mit der Leitungswand und somit zu einer Veränderung der Fliessgeschwindigkeit des Produkts führen. Alternativ kann durch eine Veränderung der Temperatur einer Leitung direkt die Temperatur des in der Leitung vorhandenen Produkts verändert und dadurch dessen Fliessgeschwindigkeit beeinflusst werden.

Gemäss einer besonders bevorzugten Ausführungsform umfasst das Verfahren einen zusätzlichen Schritt d) einer Wärmeschock-Behandlung des Extrudats, wobei der Schritt d) nach Schritt a) (d.h. nach Austritt des Extrudats aus dem Extruder) und vor dem Eintritt des Extrudats in die Kühldüsen durchgeführt wird.

Erfindungsgemäss bevorzugt wird die Wärmeschockbehandlung in einem Wärmetauscher bei 150 bis 200°C für 1s bis 10 s durchgeführt. Es wird auf die vorstehenden Ausführungen zum Wärmetauscher verwiesen.

Gemäss dieser bevorzugten Ausführungsform mit einem Wärmetauscher kann eine modulare und einstellbare Texturisierung eines zu behandelnden Materials mit geringeren Kosten und erhöhter Energieeinsparung erreicht werden. Der Wärmetauscher kann auf einfache Weise installiert werden, indem er mit stromaufwärts und stromabwärts angeordneten Komponenten auf herkömmliche Weise verbunden wird.

Es wurde gefunden, dass bei Erhöhung der Temperatur im Wärmetauscher eine stärkere Textur im Produkt erreicht werden konnte. Erfindungsgemäss bevorzugt sollte aber bei Erhöhung der Temperatur im Wärmetauscher die Temperatur in der Kühldüse verringert werden, um eine unerwünschte Blasenbildung im Produkt zu vermeiden. Erfindungsgemäss bevorzugt wird somit die Temperatur in der Kühldüse in Abhängigkeit von der Temperatur im Wärmetauscher eingestellt.

Üblicherweise wird das Extrudat durch eine Kühldüse herausgeführt, um das Extrudat unter den Siedepunkt von Wasser zu bringen und/oder Wasser zu verdampfen, d.h. unter Normalbedingungen auf eine Temperatur unterhalb von 120°C. Kühldüsen für Extruder sind hinlänglich bekannt. Üblicherweise wird das Extrudat auf eine Temperatur im Bereich von 50 bis 90°C abgekühlt.

Erfindungsgemäss bevorzugt erfolgt die Einstellung der Temperatur in der Kühldüse in Abhängigkeit von der Temperatur im Wärmetauscher derart, dass bei einer Temperatur im Wärmetauscher von 180°C bis 200°C eine Temperatur in der Kühldüse von 70°C bis 90°C eingestellt wird, und bei einer Temperatur im Wärmetauscher von 150°C bis 180°C eine Temperatur in der Kühldüse von unter 90°C bis 100°C eingestellt wird.

Gemäss einer bevorzugten Ausführungsform kann der Produktschmelze im Extruder ein Öl zugesetzt werden, um die Bruchfestigkeit des fertigen Produkts zu erhöhen. Hierfür sind lebensmittelrechtlich zugelassene Öle wie Speiseöle (beispielsweise Sonnenblumenöl) geeignet. Beispielsweise kann das Öl in einem Anteil im Bereich von 1 % bis 10 %, bevorzugt im Bereich von 2 % bis 6 %, besonders bevorzugt im Bereich von 3 % bis 4 %, bezogen auf das Gesamtgewicht aller in den Extruder eindosierten Rohstoffe, zugesetzt werden.

Nach Austritt aus der Kühldüse kann das Extrudat in einem weiteren Schritt auf bekannte Weise in geeignete Formen und Grössen geschnitten werden.

Mit der erfindungsgemässen Vorrichtung und dem erfindungsgemässen verfahren kann ein Produkt mit neuen und vorteilhaften Eigenschaften (insbesondere hinsichtlich der Textur) erhalten werden.

Die vorliegende Erfindung betrifft somit auch ein proteinhaltiges Lebensmittel, erhältlich durch ein hier vorstehend beschriebenes Verfahren.

Die vorliegende Erfindung wird anstehend anhand von nicht einschränkenden Ausführungsbeispielen und Zeichnungen näher erläutert. Es zeigen:

Fig. 1 eine schematische Ansicht einer erfindungsgemässen Verteilvorrichtung;

Fig. 2 eine schematische Ansicht einer Leitung einer erfindungsgemässen Verteilvorrichtung;

Fig. 3 ein Diagramm, in welchem die Abhängigkeit des Produktflusses durch zwei Leitungen einer erfindungsgemässen Verteilvorrichtung in Abhängigkeit von dem Temperaturunterschied in den Leitungen dargestellt ist;

Fig. 4 eine schematische Ansicht einer Ausführungsform eines erfindungsgemäss einsetzbaren Wärmetauschers;

Fig. 5 ein Diagramm, in welchem die Abhängigkeit der Blasenbildung von der Temperatur im Wärmetauscher und der Temperatur in der Kühldüse dargestellt ist.

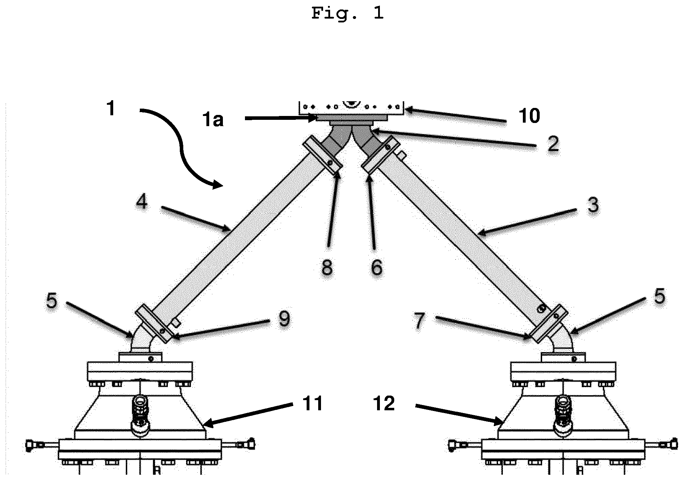

In Fig. 1 ist eine schematische Ansicht einer erfindungsgemässen Verteilvorrichtung 1 gezeigt. Die Verteilvorrichtung 1 ist über ein erstes Verbindungsstück 1a mit der Endplatte eines Extruders 10 verbunden. Durch die Endplatte des Extruders 10 austretendes Extrudat gelangt in eine Verteilereinheit 2, welche in der Ausführungsform gemäss Fig. 1 y-förmige Abschnitte umfasst, um eine präzise Verbindung mit den zylinderförmigen Leitungen 3, 4 zu realisieren. Die Ausführungsform gemäss Fig. 1 weist zwei Leitungen 3, 4 auf. Aus den Leitungen 3, 4 gelangt das Produkt in Kühldüsen 11, 12. Jede Leitung 3, 4 weist an ihrem von der Verteilereinheit 2 abgewandten Ende ein zweites Verbindungsstück 5 zur Verbindung mit einer der Kühldüsen 11, 12 auf.

In einem Anfangsabschnitt und einem Endabschnitt jeder Leitung 3, 4 ist jeweils ein Drucksensor 6, 7, 8, 9 angeordnet. Die Drucksensoren sind mit einer Steuer- und Regeleinheit (nicht gezeigt) verbunden. Mit Hilfe der Drucksensoren 6, 7, 8, 9 wird ein Druckabfall in den Leitungen 3, 4 ermittelt. Aus dem Verhältnis der ermittelten Druckabfälle in den Leitungen 3, 4 kann das Verhältnis der durch die entsprechenden Leitungen 3, 4 strömenden Teilströme ermittelt werden.

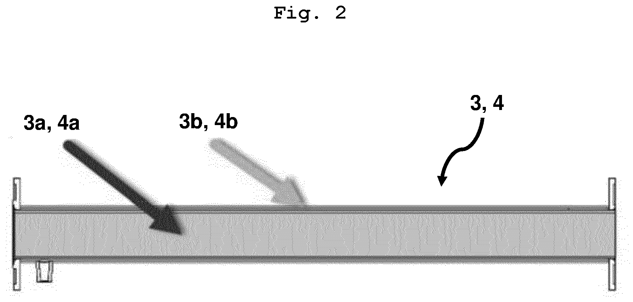

An den Leitungen 3, 4 sind Temperiereinrichtungen 3b, 4b angeordnet, die in Fig. 2 gezeigt sind. Mit Hilfe der Temperiervorrichtungen 3b, 4b kann durch die Steuer- und Regeleinheit (nicht gezeigt) ein Abkühlen oder Erhitzen des Innenraums der Leitungen 3, 4 erfolgen, um den Produktfluss durch die Leitungen 3, 4 zu modifizieren.

In Fig. 2 ist eine schematische Ansicht einer Leitung 3, 4 einer erfindungsgemässen Verteilvorrichtung 1 gezeigt. Die Leitung 3, 4 ist zylinderförmig mit einem Innenraum 3a, 4a, durch welchen Produkt strömen kann. Der Innenraum 3a, 4a ist mantelförmig von einer Temperiereinrichtung 3b, 4b umgeben. Es kann sich hierbei beispielsweise um einen ringförmigen Kanal handeln, durch welchen Kühl- oder Heizmedium geführt werden kann.

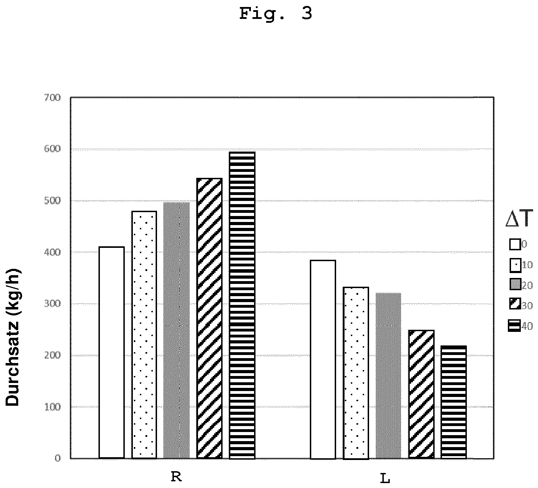

In Fig. 3 ist ein Diagramm gezeigt, in welchem die Abhängigkeit des Produktflusses durch zwei Leitungen 3, 4 einer erfindungsgemässen Verteilvorrichtung 1 in Abhängigkeit von dem Temperaturunterschied des Kühl- oder Heizmediums in den Leitungen 3, 4 dargestellt ist.

Aus einem Extruder 10 wurde zur Herstellung eines fleischanalogen Produkts geeignetes Extrudat (enthaltend pflanzliche Proteine) mit einem Gesamtdurchsatz von 800 kg/h durch die Bereiche 3a, 4a der Leitungen 3, 4 und Kühl- oder Heizmediums mit einer Temperatur von etwa 140°C durch die Bereiche 3b, 4b der Leitungen 3, 4 der Verteilvorrichtung 1 gemäss Fig. 1 und 2 geleitet. Bei gleicher Temperatur (ΔT =0) an den Leitungen 3, 4 strömte annähernd gleich viel Produkt durch jeder der Leitungen 3, 4. Wurde die rechte Leitung 3 um 10°C erwärmt (d.h. ΔT =10), erhöhte sich der Produktfluss durch die rechte Leitung 3 auf etwa 480 kg/h, während der Produktfluss durch die linke Leitung 4 auf etwa 320 kg/h sank. Durch entsprechende Erhöhung der Temperaturdifferenz ΔT an den Leitungen 3, 4 konnte der Unterschied zwischen den Produktflüssen durch die Leitungen 3, 4 weiter verstärkt werden. Bei einer Temperaturdifferenz ΔT =40 betrug der Unterschied zwischen den Produktflüssen durch die Leitungen 3, 4 etwa 600 kg/h zu 200 kg/h.

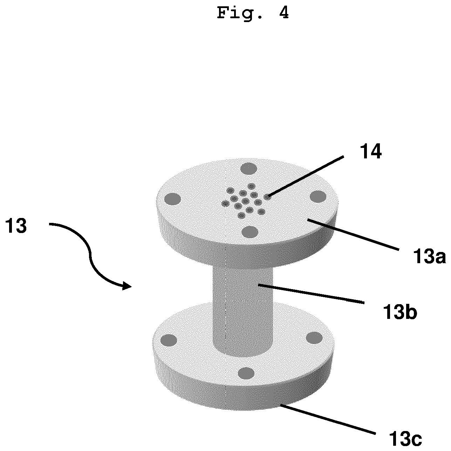

In Fig. 4 ist eine schematische Ansicht einer Ausführungsform eines erfindungsgemäss einsetzbaren Wärmetauschers 13 gezeigt. Es handelt sich hierbei um einen Bündelröhrenwärmetauscher. Bei dem Wärmetauscher 13 wird das Produkt durch enge Kanäle 14 geführt und hierbei einer homogenen Wärmebehandlung ausgesetzt. Durch die Kanäle 14 wird das Produkt von einer ersten Seite 13a des Wärmetauschers 13 durch einen länglichen, vorzugsweise zylinderförmigen Abschnitt 13b zu einer zweiten Seite 13c des Wärmetauschers geführt.

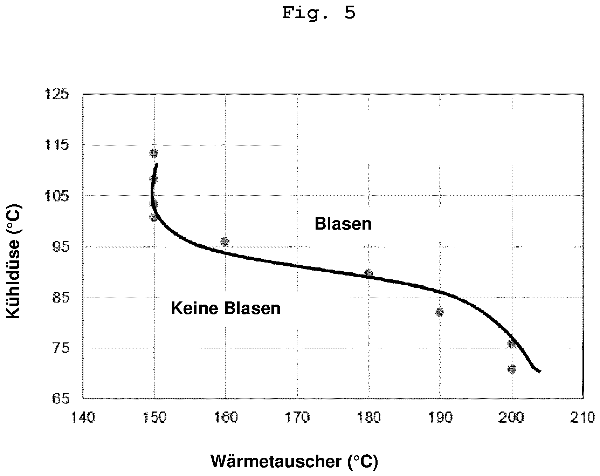

In Fig. 5 ist ein Diagramm gezeigt, in welchem die Abhängigkeit der Blasenbildung von der Temperatur im Wärmetauscher 13 und der Temperatur in der Kühldüse 11, 12 dargestellt ist. Es ist zu erkennen, dass aber bei Erhöhung der Temperatur im Wärmetauscher 13 die Temperatur in der Kühldüse 11, 12 verringert werden sollte, um eine unerwünschte Blasenbildung im Produkt zu vermeiden. Bevorzugt erfolgt die Einstellung der Temperatur in der Kühldüse 11, 12 in Abhängigkeit von der Temperatur im Wärmetauscher 13 derart, dass bei einer Temperatur im Wärmetauscher 13 von 180°C bis 200°C eine Temperatur in der Kühldüse 11, 12 von 70°C bis 90°C eingestellt wird, und bei einer Temperatur im Wärmetauscher 13 von 150°C bis 180°C eine Temperatur in der Kühldüse 11, 12 von unter 100°C bis 90°C eingestellt wird.

**Patentansprüche**

1.   Verteilvorrichtung (1) für einen Extruder (10), umfassend

     - ein erstes Verbindungsstück (1a) zur Verbindung der Verteilvorrichtung (1) mit einem Ausgang eines Extruders (10),
     - eine Verteilereinheit (2),
     - mindestens zwei von der Verteilereinheit (2) wegführende Leitungen (3, 4), wobei jede Leitung (3, 4) an ihrem von der Verteilereinheit (2) abgewandten Ende ein zweites Verbindungsstück (5) zur Verbindung mit einer Kühldüse (11, 12) aufweist;

   wobei jede Leitung (3, 4) eine Temperiervorrichtung (3b, 4b) umfasst.

2.   Verteilvorrichtung (1) nach Anspruch 1, **dadurch gekennzeichnet, dass** ein Messgerät, vorzugsweise ein Durchflussmessgerät, oder voneinander beabstandete Messgeräte (6, 7, 8, 9) bereitgestellt sind, um den Produktfluss in den Leitungen (3, 4) zu bestimmen, wobei die Messgeräte (6, 7, 8, 9) vorzugsweise ausgewählt sind aus der Gruppe bestehend aus Durchflussmessgeräten und Drucksensoren.

3. Verteilvorrichtung (1) nach Anspruch 1 oder 2, **dadurch gekennzeichnet, dass** zwei von der Verteilereinheit (2) wegführende Leitungen (3, 4) vorgesehen sind.

4. Verteilvorrichtung (1) nach einem der vorhergehenden Ansprüche, **dadurch gekennzeichnet, dass** jede Leitung (3, 4) zylinderförmig ist, wobei die Temperiervorrichtung (3b, 4b) mantelförmig den als Produktleitung dienenden Innenraum (3a, 3b) der Leitung (3, 4) umgibt.

5. Verteilvorrichtung (1) nach einem der vorhergehenden Ansprüche, **dadurch gekennzeichnet, dass** das zweite Verbindungsstück (5) einen gekrümmten Rohrabschnitt umfasst.

6. Verteilvorrichtung (1) nach einem der vorhergehenden Ansprüche, **dadurch gekennzeichnet, dass** weiterhin ein Wärmetauscher (13) umfasst ist, welcher Kanäle (14) aufweist, durch die Produkt von einer ersten Seite (13a) des Wärmetauschers (13) durch einen länglichen Abschnitt (13b) zu einer zweiten Seite (13c) des Wärmetauschers (13) geführt werden kann.

7. Extrudieranlage, umfassend einen Extruder (10) und eine Verteilvorrichtung (1) nach einem der Ansprüche 1 bis 6, welche über ein erstes Verbindungsstück (1a) mit einem Ausgang des Extruders (10) verbunden ist.

8. Extrudieranlage nach Anspruch 7, **dadurch gekennzeichnet, dass** an jeder Leitung (3, 4) der Verteilvorrichtung (1) jeweils eine Kühldüse (11, 12) über ein zweites Verbindungsstück (5), welches an einem von der Verteilereinheit (2) der Verteilvorrichtung (1) abgewandten Ende der Leitung (3, 4) angeordnet ist, angeschlossen ist.

9. Extrudieranlage nach Anspruch 7 oder 8, **dadurch gekennzeichnet, dass** weiterhin ein Wärmetauscher (13) umfasst ist, welcher Kanäle (14) aufweist, durch die Produkt von einer ersten Seite (13a) des Wärmetauschers (13) durch einen länglichen Abschnitt (13b) zu einer zweiten Seite (13c) des Wärmetauschers (13) geführt werden kann.

10. Extrudieranlage nach Anspruch 9, **dadurch gekennzeichnet, dass** der Extruder verkürzt ist, beispielsweise auf einen 5-Barrel-Extruder.

11. Verfahren zur Herstellung eines proteinhaltigen Lebensmittels in einer Extrudieranlage gemäss einem der Ansprüche 7 bis 10, umfassend die Schritte:

    a) Verarbeitung einer Rohstoffmischung, wobei mindestens ein Rohstoff ein Protein ist, vorzugsweise ein pflanzliches Protein, in einem Extruder (10),
    b) Herausführen des Extrudats aus dem Extruder (10) in die Verteilvorrichtung (1),
    c) Führen von Teilströmen des Extrudats durch Leitungen (3, 4) der Verteilvorrichtung (1) in Kühldüsen (11, 12), wobei die Fliessgeschwindigkeiten der Teilströme in den Leitungen (3, 4) mit Hilfe eines Messgeräts, vorzugsweise Durchflussmessgeräts, oder von voneinander beabstandeten Messgeräten (6, 7, 8, 9) ermittelt werden und hieraus eine Abweichungen der Fliessgeschwindigkeiten der Teilströme voneinander bestimmt werden,
    d) Gegebenenfalls Erhitzen oder Abkühlen einer Leitung (3, 4) während des Schritts c) in Abhängigkeit von den in Schritt c) ermittelten Fliessgeschwindigkeiten der Teilströme, um die Fliessgeschwindigkeiten der Teilströme in den Leitungen (3, 4) zu modifizieren.

12. Verfahren nach Anspruch 11, **dadurch gekennzeichnet, dass** das Verfahren einen zusätzlichen Schritt d) einer Wärmeschock-Behandlung des Extrudats umfasst, wobei der Schritt d) nach Schritt a) und vor dem Eintritt des Extrudats in die Kühldüsen (11, 12) durchgeführt wird.

13. Verfahren nach Anspruch 12, **dadurch gekennzeichnet, dass** die Wärmeschockbehandlung in einem Wärmetauscher bei 150 bis 200°C für 1s bis 10 s durchgeführt wird.

14. Verfahren nach Anspruch 12 oder 13, **dadurch gekennzeichnet, dass** die Temperatur in der Kühldüse in Abhängigkeit von der Temperatur im Wärmetauscher eingestellt wird.

15. Proteinhaltiges Lebensmittel, erhältlich durch ein Verfahren gemäss einem der Ansprüche 11 bis 14.

Fig. 1

Fig. 2

**3a, 4a**   **3b, 4b**   **3, 4**

Fig. 3

Fig. 4

Fig. 5

Europäisches
Patentamt

European
Patent Office

Office européen
des brevets

**EUROPÄISCHER RECHERCHENBERICHT**

Nummer der Anmeldung

EP 21 16 2581

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 398 315 A2 (NIPPON SUISAN KAISHA LTD [JP]) 22. November 1990 (1990-11-22) * Spalte 22, Zeile 13 - Spalte 31, Zeile 24; Abbildung 3 * | 1-15 | INV. A23P30/20 |
| A | GB 2 162 788 A (VINCENT PROCESSES LIMITED) 12. Februar 1986 (1986-02-12) * Seite 1, Zeile 91 - Zeile 128; Abbildungen 1,2 * | 1-15 | |
| A | US 5 643 618 A (HUBERG PETER A [US] ET AL) 1. Juli 1997 (1997-07-01) * Spalte 3, Zeile 36 - Spalte 10, Zeile 15; Abbildung 11 * | 1-15 | |
| A | EP 2 636 314 A1 (NIPPON SUISAN KAISHA LTD [JP]) 11. September 2013 (2013-09-11) * Absatz [0014] - Absatz [0053]; Abbildung 1 * | 1-15 | |

RECHERCHIERTE SACHGEBIETE (IPC)

A23P
A21C
A23L
A23G

Der vorliegende Recherchenbericht wurde für alle Patentansprüche erstellt

| Recherchenort | Abschlußdatum der Recherche | Prüfer |
|---|---|---|
| München | 26. August 2021 | Dartis, Daniel |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 21 16 2581

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-08-2021

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 0398315 | A2 | 22-11-1990 | AT | 101977 | T | 15-03-1994 |
| | | | AU | 642414 | B2 | 21-10-1993 |
| | | | CN | 1047196 | A | 28-11-1990 |
| | | | DE | 69006910 | T2 | 21-07-1994 |
| | | | DK | 0398315 | T3 | 28-03-1994 |
| | | | EP | 0398315 | A2 | 22-11-1990 |
| | | | ES | 2052095 | T3 | 01-07-1994 |
| GB 2162788 | A | 12-02-1986 | KEINE | | | |
| US 5643618 | A | 01-07-1997 | AT | 214546 | T | 15-04-2002 |
| | | | AT | 300180 | T | 15-08-2005 |
| | | | AU | 707616 | B2 | 15-07-1999 |
| | | | CA | 2192684 | A1 | 23-11-1995 |
| | | | CN | 1152855 | A | 25-06-1997 |
| | | | DE | 69525942 | T2 | 26-09-2002 |
| | | | DE | 69534346 | T2 | 01-06-2006 |
| | | | DK | 0760604 | T3 | 27-05-2002 |
| | | | EP | 0760604 | A1 | 12-03-1997 |
| | | | EP | 1166634 | A2 | 02-01-2002 |
| | | | EP | 1221284 | A2 | 10-07-2002 |
| | | | ES | 2173184 | T3 | 16-10-2002 |
| | | | ES | 2245385 | T3 | 01-01-2006 |
| | | | HK | 1047522 | A1 | 28-02-2003 |
| | | | PT | 760604 | E | 30-09-2002 |
| | | | PT | 1221284 | E | 30-11-2005 |
| | | | US | 5643618 | A | 01-07-1997 |
| | | | US | 6143342 | A | 07-11-2000 |
| | | | WO | 9531108 | A1 | 23-11-1995 |
| EP 2636314 | A1 | 11-09-2013 | EP | 2636314 | A1 | 11-09-2013 |
| | | | ES | 2546874 | T3 | 29-09-2015 |
| | | | US | 2013224367 | A1 | 29-08-2013 |
| | | | US | 2016183566 | A1 | 30-06-2016 |
| | | | WO | 2012060348 | A1 | 10-05-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012158023 A1
- WO 2021032866 A1

- EP 3524059 A1